(19) **Europäisches Patentamt / European Patent Office / Office européen des brevets**

(11) **EP 2 686 105 B1**

(12) **FASCICULE DE BREVET EUROPEEN**

(45) Date de publication et mention de la délivrance du brevet:
**14.12.2016 Bulletin 2016/50**

(21) Numéro de dépôt: **12708569.4**

(22) Date de dépôt: **10.02.2012**

(51) Int Cl.:
*B01J 31/02* (2006.01)  *B01J 23/882* (2006.01)
*B01J 27/19* (2006.01)  *B01J 37/20* (2006.01)
*C10G 45/08* (2006.01)  *B01J 21/04* (2006.01)
*B01J 21/12* (2006.01)  *B01J 23/85* (2006.01)
*B01J 23/883* (2006.01)  *B01J 23/94* (2006.01)
*B01J 31/04* (2006.01)  *B01J 35/00* (2006.01)
*B01J 37/00* (2006.01)  *B01J 38/52* (2006.01)
*B01J 38/62* (2006.01)  *C10G 45/04* (2006.01)
*C10G 45/06* (2006.01)  *C10G 45/50* (2006.01)
*C10G 45/68* (2006.01)  *C10G 47/12* (2006.01)
*B01J 37/02* (2006.01)

(86) Numéro de dépôt international:
**PCT/FR2012/000052**

(87) Numéro de publication internationale:
**WO 2012/127128 (27.09.2012 Gazette 2012/39)**

(54) **CATALYSEUR UTILISABLE EN HYDROTRAITEMENT COMPRENANT DES METAUX DES GROUPES VIII ET VIB ET PREPARATION AVEC DE L'ACIDE CITRIQUE ET DU SUCCINATE DE DIALKYLE C1-C4**

**KATALYSATOR ZUR HYDRODESULFURIERUNG UND MIT METALLEN DER GRUPPE VIII UND DER GRUPPE VIB SOWIE HERSTELLUNGSVERFAHREN MIT ZITRONENSÄURE UND C1-C4-DIALKYL-SUCCINAT**

**CATALYST WHICH CAN BE USED IN HYDROTREATMENT AND WHICH INCLUDES GROUP VIII METALS AND GROUP VIB METALS, AND PREPARATION THEREOF USING CITRIC ACID AND C1-C4 DIALKYL SUCCINATE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.03.2011 FR 1100840**

(43) Date de publication de la demande:
**22.01.2014 Bulletin 2014/04**

(73) Titulaires:
• **IFP Énergies nouvelles**
 **92852 Rueil-Malmaison Cedex (FR)**
• **Total Raffinage Marketing**
 **92800 La Défense (FR)**

(72) Inventeurs:
• **SIMON, Laurent**
 **F-69100 Villeurbanne (FR)**

• **GUICHARD, Bertrand**
 **F-38140 Izeaux (FR)**
• **DE GRANDI, Valentina**
 **B-1030 Schaerbeek (BE)**
• **MINOUX, Delphine**
 **B-1400 Nivelles (BE)**
• **DATH, Jean -Pierre**
 **B-7970 Beloeil (BE)**

(56) Documents cités:
**WO-A1-2005/035691    WO-A1-2006/077326**
**WO-A2-2007/070394**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un catalyseur, sa méthode de préparation et son utilisation dans le domaine des hydrotraitements.

Habituellement, un catalyseur d'hydrotraitement de coupes hydrocarbonées a pour but d'éliminer les composés soufrés ou azotés contenus dans celles-ci afin de mettre par exemple un produit pétrolier aux spécifications requises (teneur en soufre, teneur en aromatiques etc..) pour une application donnée (carburant automobile, essence ou gazole, fioul domestique, carburéacteur). Il peut également s'agir de pré-traiter cette charge afin d'en éliminer les impuretés avant de lui faire subir différents procédés de transformation pour en modifier les propriétés physico-chimiques, tels que par exemple les procédés de reformage, d'hydrocraquage de distillats sous vide, de craquage catalytique, d'hydroconversion de résidus atmosphériques ou sous-vide. La composition et l'utilisation des catalyseurs d'hydrotraitement sont particulièrement bien décrits dans l'article de B. S Clausen, H. T. Topsøe, et F.E. Massoth, issu de l'ouvrage Catalysis Science and Technology, volume 11 (1996), Springer-Verlag. Après sulfuration, plusieurs espèces de surface sont présentes sur le support, qui ne présentent pas toutes de bonnes performances pour les réactions souhaitées. Ces espèces sont particulièrement bien décrites dans la publication réalisée par Topsøe et al. parue dans le numéro 26 de Catalysis Review Science and Engineering de 1984, pages 395-420.

Le durcissement des normes de pollution automobile dans la communauté européenne (Journal Officiel de l'Union européenne, L76, 22 mars 2003, Directive 2003/70/CE, pages L76/10-L76/19) a contraint les raffineurs à réduire très fortement la teneur en soufre dans les carburants diesel et les essences (au maximum 10 parties par million poids (ppm) de soufre au $1^{er}$ janvier 2009, contre 50 ppm au $1^{er}$ janvier 2005). Par ailleurs, les raffineurs se trouvent contraints d'utiliser des charges de plus en plus réfractaires au procédés d'hydrotraitement d'une part parce que les bruts sont de plus en plus lourds et contiennent par conséquent de plus en plus d'impuretés, d'autre part du fait de l'augmentation des procédés de conversion dans les raffineries. En effet, ceux-ci génèrent des coupes plus difficiles à hydrotraiter que les coupes directement issues de la distillation atmosphérique. A titre d'exemple, on peut mentionner la coupe gazole issue du craquage catalytique, aussi nommée LCO (Light Cycle Oil) en référence à sa teneur élevée en composées aromatiques. Ces coupes sont co-traitées avec la coupe gazole issue de la distillation atmosphérique ; elles nécessitent des catalyseurs possédant des fonctions hydrodésulfurantes et hydrogénantes fortement améliorées par rapport aux catalyseurs traditionnels de façon à diminuer la teneur en aromatiques pour obtenir une densité et un indice de cétane en accord avec les spécifications.

En outre, les procédés de conversion comme le craquage catalytique ou l'hydrocraquage utilisent des catalyseurs possédant une fonction acide, ce qui les rend particulièrement sensibles à la présence d'impuretés azotées, et particulièrement les composés azotées basiques. Il est donc nécessaire d'utiliser des catalyseurs de pré-traitement de ces charges de façon à enlever ces composés. Ces catalyseurs d'hydrotraitement requièrent également une fonction hydrogénante améliorée dans la mesure où la première étape d'hydrodéazotation est reconnue comme étant une étape d'hydrogénation du cycle aromatique adjacent à la liaison C-N.

Il apparaît donc intéressant de trouver des moyens de préparation des catalyseurs d'hydrotraitement , de manière à obtenir de nouveaux catalyseurs à performances améliorées.

L'ajout d'un composé organique sur les catalyseurs d'hydrotraitement pour améliorer leur activité est maintenant bien connue de l'homme du métier. De nombreux brevets protègent l'utilisation de différentes gammes de composés organiques, tels que les mono,-di-ou polyalcools éventuellement éthérifiés (WO96/41848, WO01/76741, US4012340, US3954673, EP601722). Des catalyseurs modifiés avec des monoesters en C2-C 14 sont décrits dans les demandes de brevet EP466568 et EP1046424, cependant ces modifications ne permettent pas toujours d'accroître suffisamment les performances du catalyseur pour faire face aux spécifications concernant les teneurs en soufre des carburants qui ne cessent de devenir de plus en plus contraignantes pour les raffineurs.

Pour remédier à cela le brevet WO2006/077326 de la société Total propose l'utilisation d'un catalyseur comprenant des métaux des groupes VIB et VIII, un oxyde réfractaire comme support, et un composé organique comportant au moins 2 fonctions ester carboxylique de formule R1-O-CO-R2-CO-O-R1 ou R1-CO-O-R2-O-CO-R1 dans laquelle chaque R1 représente indépendamment un groupe alkyle en C1 à C18, alcényle C2 à C18, aryle C6 à C18, cycloalkyle en C3 à C8, alkylaryle ou arylalkyle en C7 à C20, ou les 2 groupes R1 forment conjointement un groupe divalent en C2 à C18, et R2 représente un groupe alkylène en C1 à C18, arylène en C6 à C18, cycloalkylène en C3 à C7, ou une combinaison de ceux-ci, la chaîne carbonée des groupes hydrocarbonés représentés par R1 et R2 pouvant contenir ou porter un ou plusieurs hétéroatomes choisis parmi N,S et O, et chacun des groupes R1 et R2 pouvant porter un ou plusieurs substituants de formule -C(=O)O-R1 ou -O-C(=O)-R1 où R1 a la signification indiquée ci-dessus. Un mode préféré utilise le succinate de dialkyle C1-C4, et en particulier le succinate de diméthyle qui est exemplifié. Ces composés peuvent être introduits en présence d'un solvant (une liste importante de solvants est citée) ou d'un acide carboxylique. Parmi la trentaine d'acide nommément citée, l'acide acétique est présent mais n'est pas cité parmi la dizaine d'acides préférés. On notera dès maintenant que l'acide citrique est préféré.

Le procédé de préparation du catalyseur tel que décrit dans le brevet WO2006/077326 comprend des étapes de maturation et traitement thermique pouvant aller jusqu'à plusieurs jours, par exemple de 49 jours à 115 jours, ce qui limiterait très fortement la production de ces catalyseurs et nécessiterait par conséquent d'apporter des améliorations.

D'autres brevets dans l'art antérieur décrivent un gain d'activité lié à l'utilisation combinée d'un acide organique ou d'un alcool sur un catalyseur d'hydrotraitement. Ainsi, la demande de brevet publiée sous le n° JP1995-136523 de KK Japan Energy propose une solution consistant à :

- préparer selon un premier mode préféré de l'invention une solution contenant un support de catalyseur, un ou plusieurs métaux du groupe VI du tableau périodique des éléments, et du groupe VIII, un acide organique. Selon un second mode préféré de l'invention, cette solution comprend également un précurseur de phosphore.

- un traitement thermique réalisé entre 200 et 400°C

- une imprégnation du catalyseur obtenu précédemment par un acide organique ou un alcool dans un ratio de 0,1 à 2 par mole de métaux.

Un des modes préférés de l'invention comprend ensuite un séchage à une température inférieure à 200°C, tandis qu'un second mode préféré comprend un traitement thermique final à une température supérieure ou égale à 400°C.

On a constaté que ces catalyseurs ne présentent pas une activité suffisante pour satisfaire les nouvelles normes environnementales face aux charges de plus en plus pauvres en hydrogène dont disposent les raffineurs.

De même, le brevet WO2005/035691 revendique un procédé d'activation qui permet schématiquement de diminuer la teneur en phase cristallisée de type $CoMoO_4$ présente sur les catalyseurs régénérés comprenant des oxydes des métaux des groupes VIII et VIB, procédé comprenant la mise en contact du catalyseur régénéré avec un acide et un additif organique. A cette fin, l'emploi de la combinaison acide citrique (CA) et polyéthylène glycol (PEG) a été réalisé sur catalyseur régénéré dans de nombreux exemples.

La présente invention concerne un catalyseur et son procédé de préparation, le catalyseur étant utilisable pour l'hydrotraitement et permettant une amélioration des performances catalytiques (notamment de l'activité catalytique) par rapport aux catalyseurs de l'art antérieur. En effet, il a été mis en évidence que l'utilisation du couple succinate de dialkyle C1-C4 ,et en particulier de diméthyle, et acide citrique , en présence éventuellement d'acide acétique sur un précurseur catalytique séché, calciné ou régénéré conduit de façon surprenante à une activité catalytique nettement améliorée.

Plus précisément, l'invention concerne un catalyseur comprenant un support amorphe à base d'alumine, au moins un succinate de dialkyle C1-C4, de l'acide citrique, du phosphore et une fonction hydro-deshydrogénante comprenant au moins un élément du groupe VIII et au moins un élément du groupe VIB, catalyseur dont le spectre Raman comprend les bandes à 990 et/ou 974 cm-1 caractéristiques d'au moins un hétéropolyanion de Keggin, les bandes caractéristiques dudit succinate et les bandes caractéristiques de l'acide citrique. Dans un mode préféré, le catalyseur comprend également l'acide acétique.

L'invention concerne également le catalyseur sulfuré. Il est obtenu par sulfuration du catalyseur décrit dans la présente demande.

La fonction hydro-déshydrogénante comprend au moins un élément du groupe VIII (de préférence cobalt et/nickel) et au moins un élément du groupe VIB (de préférence molybdène et/ou tungstène) . De préférence, la fonction hydro-déshydrogénante comprend du molybdène et du cobalt et/ou du nickel.

Le catalyseur obtenu possède un spectre Raman caractéristique regroupant :

1) des bandes caractéristiques du ou des hétéropolyanions de type Keggin $PXY_{11}O_{40}{}^{x-}$ et/ou $PY_{12}O_{40}{}^{x-}$ où Y est un métal du groupe VIB et X un métal du groupe VIII.

D'après Griboval, Blanchard, Payen, Fournier, Dubois dans Catalysis Today 45 (1998) 277 fig. 3 e), les bandes principales de la structure $PCoMo_{11}O_{40}{}^{x-}$ sont sur catalyseur séché à 232, 366, 943, 974 cm-1 et d'après M. T. Pope "Heteropoly and Isopoly oxometalates", Springer Verlag, p 8, ces bandes ne sont pas caractéristiques de la nature de l'atome X ou Y, mais bien de la structure de l'hétéropolyanion. La bande la plus intense caractéristique de ce type d' hétéropolyanion de Keggin lacunaire se situe à 974 cm-1.

D'après Griboval, Blanchard, Gengembre, Payen, Fournier, Dubois, Bernard, Journal of Catalysis 188 (1999) 102, fig. 1 a), les bandes principales de $PMo_{12}O_{40}{}^{x-}$ sont à l'état massique de l'hétéropolyanion, par exemple avec du cobalt en contre ion à 251, 603, 902, 970, 990 cm-1. La bande la plus intense caractéristique de cet hétéropolyanion de Keggin se situe à 990 cm-1. M. T. Pope "Heteropoly and Isopoly oxometalates", Springer Verlag, p 8, nous enseigne également que ces bandes ne sont pas caractéristiques de la nature de l'atome X ou Y, mais bien de la structure de l'hétéropolyanion de Keggin, complet, lacunaire ou substitué.

2) des bandes caractéristiques du (des) succinate(s) de dialkyle utilisé(s). Le spectre Raman du succinate de diméthyle constitue une empreinte univoque de cette molécule. Dans la zone spectrale 300-1800 $cm^{-1}$, ce spectre se caractérise par la série de bandes suivantes (seules les bandes les plus intenses sont reportées, en $cm^{-1}$) : 391, 853 (bande la plus intense), 924, 964, 1739 $cm^{-1}$.La bande la plus intense caractéristique du succinate de diméthyle est à 853$cm^{-1}$ .Le spectre du succinate de diéthyle comporte dans la zone spectrale considérée les bandes principales suivantes : 861 (bande la plus intense), 1101, 1117 $cm^{-1}$. De même pour le succinate de dibutyle : 843, 1123, 1303, 1439,1463 $cm^{-1}$ et pour le succinate de diisopropyle: 833, 876, 1149, 1185, 1469 (bande la plus intense), 1733 $cm^{-1}$.

3) des bandes caractéristiques de l'acide citrique dont les principales sont : 785, 947, 956, 908 $cm^{-1}$. Les bandes les plus intenses caractéristiques de l'acide citrique sont à 785 et 956 $cm^{-1}$.

Dans un mode préféré, le catalyseur comprend également l'acide acétique dont la raie Raman la plus intense caractéristique est à 896 $cm^{-1}$. Les autres bandes caractéristiques de l'acide acétique sont : 448, 623, 896 $cm^{-1}$. La bande la plus intense est à 896 $cm^{-1}$.

La position exacte des bandes, leurs formes et leur intensités relatives peuvent varier dans une certaine mesure en fonction des conditions d'enregistrement du spectre, tout en restant caractéristiques de cette molécule. Les spectres Raman des composés organiques sont par ailleurs bien documentés soit dans les bases de données de spectre Raman (voir par exemple, Spectral Database for Organic Compounds, http://riodb01.ibase.aist.go.jp/sdbs/cgi-bin/direct_frame_top.cgi) soit par les fournisseurs du produit (voir par exemple, www.sigmaaldrich.com).

Les spectres Raman ont été obtenus avec un spectromètre de type Raman dispersif équipé d'un laser argon ionisé (514 nm). Le faisceau laser est focalisé sur l'échantillon à l'aide d'un microscope équipé d'un objectif x50 longue distance de travail. La puissance du laser au niveau de l'échantillon est de l'ordre de 1 mW. Le signal Raman émis par l'échantillon est collecté par le même objectif et est dispersé à l'aide d'un réseau 1800 tr/mn puis collecté par un détecteur CCD. La résolution spectrale obtenue est de l'ordre de 0,5 $cm^{-1}$. La zone spectrale enregistrée est comprise entre 300 et 1800 $cm^{-1}$. La durée d'acquisition a été fixée à 120 s pour chaque spectre Raman enregistré.

Le succinate de dialkyle est avantageusement le succinate de diméthyle, le succinate de dibutyle, le succinate de diisopropyle.

De préférence, le succinate de dialkyle utilisé est le succinate de diméthyle, et le catalyseur possède dans son spectre les bandes Raman principales à 990 et/ou 974 $cm^{-1}$ caractéristique(s) du (des) hétéropolyanion(s) de Keggin, et 853 $cm^{-1}$ caractéristique du succinate de diméthyle et 785 et 956 $cm^{-1}$ caractéristiques de l'acide citrique et éventuellement à 896 $cm^{-1}$ caractéristique de l'acide acétique.

De préférence le catalyseur de l'invention comprend un support constitué d'alumine ou de silice-alumine.

Le catalyseur selon l'invention peut comprendre également du bore et/ou du fluor et/ou du silicium, et de préférence du bore et/ou du fluor.

Il est également ici décrit un procédé de préparation du catalyseur selon l'invention, qui comporte au moins une étape d'imprégnation d'un précurseur catalytique séché à une température inférieure à 180°C contenant au moins une fonction hydro-déshydrogénant et éventuellement du phosphore ainsi qu'un support amorphe, par une solution comprenant la combinaison acide citrique (avec éventuellement de l'acide acétique) et succinate de dialkyle C1-C4 en présence ou non d'un composé contenant du phosphore, suivie d'une étape de maturation dudit précurseur catalytique imprégné contenant du phosphore, puis une étape de séchage à une température inférieure à 200°C, sans étape de calcination (traitement thermique sous air) ultérieure ; le catalyseur obtenu est de préférence soumis à une étape de sulfuration.

Il est également décrit un procédé de préparation du catalyseur selon l'invention tel que décrit ci-dessus mais à partir d'un précurseur catalytique calciné, ledit précurseur catalytique ayant été préparé de la même façon que précédemment mais calciné après l'étape de séchage à une température inférieure à 180°C. De la même façon que précédemment, le catalyseur obtenu est de préférence soumis à une étape de sulfuration.

La calcination (traitement thermique sous atmosphère oxydante) est réalisée à au moins 350°C lors de la préparation d'un catalyseur frais (c'est-à-dire non encore utilisé). La température est inférieure à 600°C et le plus souvent inférieure à 550°C , par exemple de 350 à 550°C , et de préférence de 400-520°C, ou de façon préférée de 420-520°C ou de 450-520°C, des températures inférieures à 500°C sont souvent avantageuses.

Il est également décrit un procédé de préparation du catalyseur selon l'invention tel que décrit ci-dessus, mais à partir d'un catalyseur usé (qui a été utilisé) et régénéré (combustion du carbone déposé sur le catalyseur qui a été utilisé). La régénération est réalisée en général à des températures comprises entre 350 et 550°C, et le plus souvent entre 400 et 520°C , ou entre 420 et 520°C , ou encore entre 450 et 520°C, des températures inférieures à 500 ou 480°C étant souvent avantageuses.

D'autres modes de réalisation peuvent être envisagés, qui restent dans l'invention, par exemple après l'étape de séchage, le précurseur catalytique subit un traitement thermique au-dessus de la température de séchage (qui est d'au plus 180°C) et en-dessous de la température de calcination (qui est d'au moins 350°C).

Ces procédés de préparation simples et rapides, avec des étapes unitaires ne dépassant pas quelques heures, permettent ainsi une meilleure productivité à l'échelle industrielle que les procédés présentés dans l'art antérieur.

Ainsi, l'invention décrit plus précisément un procédé de préparation d'un catalyseur comprenant les étapes successives suivantes :

ab) préparation d'un précurseur catalytique contenant les éléments de la fonction hydro-déshydrogénante, éventuellement du phosphore, ledit précurseur ayant subi au moins un traitement thermique

c) au moins une étape d'imprégnation par une solution d'imprégnation comprenant au moins un succinate de dialkyle C1-C4, l'acide citrique et au moins un composé de phosphore, si le phosphore n'a pas été introduit par imprégnation en totalité à l'étape a) et éventuellement l'acide acétique,

d) une étape de maturation,

e) une étape de séchage à une température inférieure à 200°C, sans étape de calcination ultérieure.

Le traitement thermique de l'étape ab) comporte au moins une étape de séchage à une température d'au plus 180°C. Il peut en outre comporter une étape de calcination. Il peut également être inclus dans une étape de régénération.

Dans un mode de préparation avec un catalyseur séché et éventuellement calciné, le procédé selon l'invention comporte les étapes successives suivantes:

a) au moins une étape d'imprégnation d'un support amorphe à base d'alumine par au moins une solution contenant les éléments de la fonction hydro-déshydrogénante, et éventuellement du phosphore; on appellera le produit obtenu "précurseur catalytique"

b) séchage à une température inférieure à 180°C éventuellement suivi d'une calcination à une température d'au moins 350°C, et de préférence comprise entre 420 et 520°C; on appellera le produit "précurseur catalytique séché ou calciné"

c) au moins une étape d'imprégnation par une solution d'imprégnation comprenant au moins un succinate de dialkyle C1-C4, l'acide citrique , au moins un composé de phosphore, si le phosphore n'a pas été introduit en totalité à l'étape a) et éventuellement l'acide acétique,

d) une étape de maturation,

e) une étape de séchage à une température inférieure à 200°C, sans étape de calcination ultérieure.

L'invention décrit également un procédé de préparation d'un catalyseur ,à partir d'un précurseur catalytique qui est un catalyseur usé ,comprenant les étapes successives suivantes :

a'b') régénération du catalyseur usé comprenant une fonction hydro-déshydrogénante et éventuellement du phosphore,

c) au moins une étape d'imprégnation par une solution d'imprégnation comprenant au moins un succinate de dialkyle C1-C4, l'acide citrique et éventuellement (et de préférence) au moins un composé de phosphore si le phosphore n'a pas été introduit en totalité dans le catalyseur de l'étape a'b'), et éventuellement l'acide acétique

d) une étape de maturation,

e) une étape de séchage à une température inférieure à 200°C, sans étape de calcination ultérieure.

De préférence, le produit obtenu à l'issue de l'étape e) subit une étape f) de sulfuration. L'invention concerne également le catalyseur sulfuré.

Ainsi que cela sera décrit ultérieurement, le procédé selon l'invention est réalisé de préférence avec les modes suivants pris seuls ou en combinaison : le support est constitué d'alumine ou de silice alumine; la totalité de la fonction hydrogénante est introduite lors de l'étape a) ; la totalité du phosphore est introduite lors de l'étape a); le succinate de dialkyle est le succinate de diméthyle ; l'étape c) est réalisée en présence d'eau et/ou d'éthanol; l'étape d) est réalisé

à une température entre 17 et 60°C ou 50°C ; l'étape e) est réalisée à une température comprise entre 80 et 180°C.

Dans un mode de réalisation, l'étape b) de séchage est réalisée à une température inférieure à 180°C sans traitement thermique ou calcination ultérieure.

Par exemple, le procédé selon l'invention comprend les étapes successives suivantes :

a) au moins une étape d'imprégnation à sec dudit support par une solution contenant la totalité des éléments de la fonction hydro-déshydrogénante, et la totalité du phosphore,

b) séchage à une température comprise entre 75 et 130°C sans traitement thermique ultérieur,

c) au moins une étape d'imprégnation à sec par une solution d'imprégnation comprenant le succinate de diméthyle et l'acide citrique, et éventuellement l'acide acétique,

d) une étape de maturation à 17-60°C,

e) une étape de séchage , de préférence sous azote, à une température comprise entre 80 et 160°C, sans étape de traitement thermique ultérieur .

Le précurseur catalytique contenant la fonction hydro-déshydrogénante et un support amorphe à base d'alumine ainsi que son mode de préparation sont décrits ci dessous.

Ledit précurseur catalytique obtenu à l'issue de l'étape a) du procédé selon l'invention peut être préparé pour une grande part par toutes les méthodes bien connues de l'homme du métier.

Ledit précurseur catalytique contient une fonction hydro-déshydrogénante. Avantageusement, il contient du phosphore et/ou du bore et/ou du fluor en tant que dopant ainsi que le support amorphe.

Le support amorphe dudit précurseur catalytique est à base d'alumine. Il contient généralement plus de 25 %, voire plus de 35 % et de préférence plus de 50 % poids d'alumine De façon préférée, il contient uniquement de l'alumine ou de la silice-alumine avec éventuellement le(s) métal (métaux) et/ou le(s) dopant(s) qui ont été introduits en-dehors des imprégnations (introduits par ex lors de la préparation -malaxage, peptisation... du support ou de sa mise en forme).

Le support est obtenu après mise en forme (extrusion de préférence) . Il est soumis à une calcination, en général entre 300-600°C.

De préférence, le support est constitué d'alumine. De préférence, l'alumine est l'alumine gamma et de préférence ledit support est constitué d'alumine gamma.

Dans un autre cas préféré, c'est une silice-alumine contenant plus de 25 %, voire plus de 35% et de préférence au moins (ou plus de) 50% poids d'alumine. La teneur en silice dans le support est d'au plus 50 % poids, le plus souvent inférieure ou égale à 45 % poids, de préférence inférieure ou égale à 40 % poids. De préférence le support est constitué de silice-alumine.

Les sources de silicium sont bien connues de l'homme du métier. On peut citer à titre d'exemple l'acide silicique, la silice sous forme de poudre ou sous forme colloïdale (sol de silice), le tétraéthylorthosilicate $Si(OEt)_4$.

On comprend par "support amorphe" un support qui ne contient pas de phases cristallines en-dehors de celles qui pourraient exister dans l'alumine ou la silice-alumine.

La fonction hydro-deshydrogénante dudit précurseur catalytique est assurée par au moins un élément du groupe VIB et par au moins un élément du groupe VIII.

La teneur totale en éléments hydro-déshydrogénants est avantageusement supérieure à 6 % poids d'oxyde par rapport au poids total du catalyseur. Les éléments du groupe VIB préférés sont le molybdène et le tungstène, et en particulier le molybdène. Les éléments du groupe VIII préférés sont des éléments non nobles et en particulier le cobalt et le nickel. Avantageusement, la fonction hydro-déshydrogénante comprend (et de préférence est constituée de) du molybdène, du nickel et/ou du cobalt.

Avantageusement, la fonction hydrogénante est choisie dans le groupe formé par les combinaisons des éléments cobalt-molybdène, nickel-molybdène, ou nickel-cobalt-molybdène, ou nickel-molybdène-tungstène.

Dans le cas où une activité importante en hydrodésulfuration, ou en hydrodéazotation et en hydrogénation des aromatiques est souhaitée, la fonction hydro-deshydrogénante est avantageusement assurée par l'association de nickel et de molybdène ; une association de nickel et de tungstène en présence de molybdène peut également être avantageuse. Dans le cas des charges de type distillats sous vide ou plus lourdes, des combinaisons de type cobalt-nickel-molybdène peuvent être avantageusement utilisées.

Les précurseurs de molybdène qui peuvent être utilisés sont également bien connus de l'homme du métier. Par exemple, parmi les sources de molybdène, on peut utiliser les oxydes et hydroxydes, les acides molybdiques et leurs sels en particulier les sels d'ammonium tels que le molybdate d'ammonium, l'heptamolybdate d'ammonium, l'acide phosphomolybdique ($H_3PMo_{12}O_{40}$) et leurs sels, et éventuellement l'acide silicomolybdique ($H_4SiMo_{12}O_{40}$) et les sels.

Les sources de molybdène peuvent également être tout hétéropolycomposé de type Keggin, Keggin lacunaire, Keggin substitué, Dawson, Anderson, Strandberg, par exemple. On utilise de préférence le trioxyde de molybdène et les hétéropolycomposés (hétéropolyanions) de type Strandberg, Keggin, Keggin lacunaire ou Keggin substitué.

Les précurseurs de tungstène qui peuvent être utilisés sont également bien connus de l'homme du métier. Par exemple, parmi les sources de tungstène, on peut utiliser les oxydes et hydroxydes, les acides tungstiques et leurs sels en particulier les sels d'ammonium tels que le tungstate d'ammonium, le métatungstate d'ammonium, l'acide phosphotungstique et leurs sels, et éventuellement l'acide silicotungstique ($H_4SiW_{12}O_{40}$) et les sels. Les sources de tungstène peuvent également être tout hétéropolycomposé de type Keggin, Keggin lacunaire, Keggin substitué, Dawson, par exemple. On utilise de préférence les oxydes et les sels d'ammonium tel que le métatungstate d'ammonium ou les hétéropolyanions de type Keggin, Keggin lacunaire ou Keggin susbtitué.

La quantité de précurseur(s) d' (des) élément(s) du groupe VIB est avantageusement comprise entre 5 et 40 % poids d'oxydes du groupe VIB par rapport au précurseur catalytique après traitement thermique de l'étape ab) ou b), de préférence entre 8 et 35% poids et de manière très préférée entre 10 et 30 % poids.

Les précurseurs d' (des) élément(s) du groupe VIII qui peuvent être utilisés sont avantageusement choisis parmi les oxydes, les hydroxydes, les hydroxycarbonates, les carbonates et les nitrates , par exemple l'hydroxycarbonate de nickel, le carbonate de cobalt ou l'hydroxyde de cobalt sont utilisés de manière préférée.

La quantité de précurseur(s) d' (des) élément(s) du groupe VIII est avantageusement comprise entre 1 et 10 % poids d'oxydes du groupe VIII par rapport au précurseur catalytique après traitement thermique de l'étape ab) ou b), de préférence entre 1,5 et 9 %poids et de manière très préférée, entre 2 et 8 % poids.

La fonction hydro-deshydrogénante dudit précurseur catalytique peut être introduite dans le catalyseur à divers niveaux de la préparation et de diverses manières. Ladite fonction hydro-deshydrogénante est toujours introduite, au moins en partie et de préférence en totalité, par imprégnation du support mis en forme. Elle peut aussi être introduite en partie lors de la mise en forme dudit support amorphe.

Dans le cas où la fonction hydro-deshydrogénante est introduite en partie lors de la mise en forme dudit support amorphe, elle peut être introduite en partie (par exemple au plus 10 % poids d'élément(s) du groupe VIB, par exemple introduit par malaxage) seulement au moment du malaxage avec un gel d'alumine choisi comme matrice, le reste de l'(des ) élément(s) hydrogénant(s) étant alors introduit ultérieurement. De manière préférée, lorsque la fonction hydro-deshydrogénante est introduite pour partie au moment du malaxage, la proportion d'élément(s) du groupe VIB introduite au cours de cette étape est inférieure à 5 % poids de la quantité totale d'élément(s) du groupe VIB introduite sur le catalyseur final. De manière préférée, au moins un élément (ou tous) du groupe VIB est introduit en même temps qu'au moins un élément (ou tous) du groupe VIII, quel que soit le mode d'introduction. Ces méthodes et quantités pour l'introduction des éléments sont employées notamment dans le cas où la fonction hydro-déshydrogénante est constituée par CoMo.

Dans le cas où la fonction hydro-déshydrogénante est introduite au moins en partie et de préférence en totalité, après la mise en forme dudit support amorphe, l'introduction de ladite fonction hydro-deshydrogénante sur le support amorphe peut être avantageusement effectuée par une ou plusieurs imprégnations en excès de solution sur le support mis en forme et calciné, ou de préférence par une ou plusieurs imprégnations à sec et, de manière préférée, par une imprégnation à sec dudit support mis en forme et calciné, à l'aide de solutions contenant les sels précurseurs des métaux. De manière très préférée, la fonction hydro-déshydrogénante est introduite en totalité après la mise en forme dudit support amorphe, par une imprégnation à sec dudit support à l'aide d'une solution d'imprégnation contenant les sels précurseurs des métaux. L'introduction de ladite fonction hydro-deshydrogénante peut également être avantageusement effectuée par une ou plusieurs imprégnations du support mis en forme et calciné, par une solution du (ou des) précurseur(s) de la phase active. Dans le cas où les éléments sont introduits en plusieurs imprégnations des sels précurseurs correspondants, une étape de séchage intermédiaire du catalyseur est en général effectuée, à une température comprise entre 50 et 180°C, de manière préférée entre 60 et 150°C et de manière très préférée entre 75 et 130°C.

Du phosphore est également introduit dans le catalyseur. Un autre dopant du catalyseur peut également être introduit qui est de préférence choisi parmi le bore, le fluor pris seul ou en mélange. Le dopant est un élément ajouté, qui en lui-même ne présente aucun caractère catalytique mais qui accroît l'activité catalytique du (des) métal (métaux).

La source de bore peut être l'acide borique, de préférence l'acide orthoborique $H_3BO_3$, le biborate ou le pentaborate d'ammonium, l'oxyde de bore, les esters boriques. Le bore peut être introduit par exemple par une solution d'acide borique dans un mélange eau/alcool ou encore dans un mélange eau/ éthanolamine.

La source de phosphore préférée est l'acide orthophosphorique $H_3PO_4$, mais ses sels et esters comme phosphates d'ammonium conviennent également. Le phosphore peut également être introduit en même temps que le(s) élément(s) du groupe VIB sous la forme d'hétéropolyanions de Keggin, Keggin lacunaire, Keggin substitué ou de type Strandberg.

Les sources de fluor qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Le fluor peut être introduit par exemple par imprégnation d'une solution aqueuse d'acide fluorhydrique, ou de fluorure d'ammonium ou encore de bifluorure d'ammonium.

Le dopant est avantageusement introduit dans le précurseur catalytique dans une quantité d'oxyde dudit dopant par rapport au précurseur catalytique après traitement thermique de l'étape ab) ou b) :

- comprise entre 0 et 40 % poids, de préférence de entre 0 et 30 % poids et de manière encore plus préférée entre 0 et 20 % poids, de préférence entre 0 et 15 % poids et de manière encore plus préférée entre 0 et 10 % poids lorsque ledit dopant est le bore ; lorsque le bore est présent, de préférence la quantité minimum est de 0,1% ou 0,5% poids.

- comprise entre 0,1 (ou 0.5%) à 20 % poids, de préférence entre 0,1 (ou 0.5%) et 15 % poids et de manière encore plus préférée entre 0,1 (ou 0.5%) et 10 % poids, lorsque ledit dopant est le phosphore. Cette quantité représente la quantité de phosphore introduite par imprégnation. Ainsi pour la préparation du catalyseur frais, elle représente la quantité qui est imprégnée lors de l'étape a) et lors de l'étape c) si celle-ci-ci n'a pas été imprégnée ou n'a pas été imprégnée en totalité à l'étape a). En ce qui concerne le catalyseur régénéré, elle représente la quantité de phosphore présente sur le catalyseur usé après régénération plus celle imprégnée lors de l'étape c). Le phosphore présent sur le catalyseur régénéré provient de l'imprégnation qui a eu lieu lors de la préparation de ce catalyseur à l'état frais.

- comprise entre 0 et 20 % poids, de préférence entre 0 et 15 % poids et de manière encore plus préférée entre 0 et 10 % poids, lorsque ledit dopant est le fluor; lorsque le fluor est présent, de préférence la quantité minimum est de 0,1% ou 0,5% poids.

Le phosphore est toujours présent. Le phosphore est généralement introduit lors de l'imprégnation du support avec l'un au moins des éléments de la fonction hydro-déshydrogénante (étape a) du procédé) et/ou est introduit lors de l'imprégnation avec le succinate et le(s)acide(s) (étape c) du procédé). De préférence il est introduit en totalité dans l'étape a) c'est-à-dire sur le précurseur catalytique.

Avantageusement, le phosphore est introduit, en totalité ou en partie, en mélange avec le(s) précurseur(s) de la fonction hydro-déshydrogénante, sur le support amorphe mis en forme, de préférence des extrudés l'alumine ou de silice-alumine, par une imprégnation à sec dudit support amorphe à l'aide d'une solution contenant les sels précurseurs des métaux et le(s) précurseur(s) du (des) dopant(s).

De façon préférée, il en est de même pour les autres dopants. Le dopant peut également être introduit dès la synthèse du support. Il peut également être introduit juste avant ou juste après la peptisation de la matrice choisie, telle que par exemple et de préférence l'oxyhydroxyde d'aluminium (boehmite) précurseur de l'alumine. Par contre , du phosphore devra être introduit sur le support mis en forme, de préférence par imprégnation, et avantageusement par imprégnation à sec.

De manière encore plus préférée, le "précurseur catalytique" dans l'étape a) du procédé selon l'invention est préparé avec une solution d'imprégnation contenant au moins un précurseur de chaque élément de la fonction hydro-déshydrogénante, en présence d'un précurseur de phosphore, le support amorphe étant constitué d'alumine ou de silice alumine.

L'introduction de ladite fonction hydro-deshydrogénante et éventuellement d'un dopant dans ou sur le support calciné mis en forme est ensuite avantageusement suivie d'une étape b) de séchage au cours de laquelle le solvant des sels métalliques précurseurs du (ou des) oxydes de métal(aux) (solvant qui est généralement de l'eau) est éliminé, à une température comprise entre 50 et 180°C, de manière préférée entre 60 et 150°C ou encore entre 65 et 145°C et de manière très préférée entre 70 et 140°C ou encore entre 75 et 130°C.

Dans un procédé selon l'invention, l'étape de séchage du "précurseur catalytique séché" ainsi obtenu n'est jamais suivie d'une étape de traitement thermique sous air à une température supérieure à 200°C. Avantageusement, on opère dans ces gammes de températures à une température d'au plus 150°C.

Ainsi, généralement dans l'étape a) du procédé selon l'invention, ledit "précurseur catalytique" est obtenu par imprégnation à sec d'une solution comprenant un (ou des) précurseur(s) de la fonction hydro-déshydrogénante, et du phosphore sur un support amorphe à base d'alumine calciné mis en forme, suivie d'un séchage à une température inférieure à 180°C.

Il est ainsi obtenu est un "précurseur catalytique séché" à l'issue de l'étape b).

Dans un autre procédé de préparation, après l'étape a), le précurseur catalytique est séché puis calciné à une température d'au moins 350°C. La température de calcination est inférieure à 600°C et le plus souvent inférieure à 550°C, par exemple de 350 à 550°C, et de préférence entre 400 et 520°C, ou de façon préférée entre 420 et 520°C ou entre 450 et 520°C, des températures inférieures à 500°C sont souvent avantageuses.

Dans un autre procédé de préparation, le catalyseur usé (contenant la fonction hydro-déshydrogénante et du phosphore) est régénéré (étape appelée a'b'). Ce procédé sera détaillé plus loin. Le catalyseur régénéré obtenu est soumis aux étapes ci-après décrites.

Conformément à l'étape c) du procédé selon l'invention, ledit précurseur catalytique séché ou calciné ou régénéré est imprégné par une solution d'imprégnation comprenant au moins un succinate de dialkyle C1-C4 (et en particulier du succinate de diméthyle) et de l'acide citrique et éventuellement de l'acide acétique.

Lesdits composés sont avantageusement introduits dans la solution d'imprégnation de l'étape c) du procédé selon l'invention dans une quantité correspondant (par rapport au précurseur catalytique après traitement thermique de l'étape ab) ou b):

- à un rapport molaire de succinate de dialkyle (par ex diméthyle) par élément(s) du groupe VIB imprégné du précurseur catalytique compris entre 0,15 à 2 mole/mole, de préférence compris entre 0,3 à 1,8 mole/mole, de manière préférée compris entre 0,5 et 1,5 mole/mole et de manière très préférée, compris entre 0,8 et 1,2 mole/mole, et

- à un rapport molaire d'acide citrique par élément(s) du groupe VIB imprégné du précurseur catalytique compris entre 0,05 à 5 mole/mole, de préférence compris entre 0,1 ou 0,5 à 4 mole/mole, de manière préférée compris entre 1,3 et 3 mole/mole et de manière très préférée, compris entre 1,5 et 2,5 mole/mole,

- et , lorsque l'acide acétique est présent, à un rapport molaire d'acide acétique par élément(s) du groupe VIB imprégné du précurseur catalytique compris entre 0,1 à 6 mole/mole, de préférence compris entre 0,5 à 5 mole/mole, de manière préférée compris entre 1,0 et 4 mole/mole et de manière très préférée, compris entre 1,5 et 2,5 mole/mole,

- le rapport molaire d'acide citrique + acide acétique par élément(s) du groupe VIB imprégné du précurseur catalytique compris entre 0,15 à 6 mole/mole.

Conformément à l'étape c) du procédé selon l'invention, la combinaison succinate de dialkyle et acide citrique (avec éventuellement l'acide acétique) est introduite sur le précurseur catalytique (séché, calciné , régénéré) par au moins une étape d'imprégnation et de préférence par une seule étape d'imprégnation d'une solution d'imprégnation sur ledit précurseur catalytique.

Ladite combinaison peut avantageusement être déposée en une ou plusieurs étapes soit par imprégnation en slurry, soit par imprégnation en excès, soit par imprégnation à sec, soit par tout autre moyen connus de l'homme du métier.

Selon un mode de réalisation préféré de l'étape c) du procédé de préparation selon l'invention, l'étape c) est une seule étape d'imprégnation à sec.

Conformément à l'étape c) du procédé selon l'invention, la solution d'imprégnation de l'étape c) comprend au moins la combinaison du succinate de dialkyle C1-C4 (en particulier du diméthyle) et de l'acide citrique. De préférence elle contient aussi de l'acide acétique.

La solution d'imprégnation utilisée à l'étape c) du procédé selon l'invention peut être complétée par tout solvant non protique connu de l'homme du métier comprenant notamment le toluène, le xylène.

La solution d'imprégnation utilisée à l'étape c) du procédé selon l'invention peut être complétée par tout solvant polaire connu de l'homme du métier. Ledit solvant polaire utilisé est avantageusement choisi dans le groupe formé par le méthanol, l'éthanol, l'eau, le phénol, le cyclohexanol, pris seuls ou en mélange. Ledit solvant polaire utilisé dans l'étape c) du procédé selon l'invention peut également être avantageusement choisi dans le groupe formé par le carbonate de propylène, le DMSO (diméthylsulfoxyde) ou le sulfolane, pris seul ou en mélange. De manière préférée, on utilise un solvant protique polaire. Une liste des solvants polaires usuels ainsi que leur constante diélectrique peut être trouvée dans le livre "Solvents and Solvent Effects in Organic Chemistry, C. Reichardt, Wiley-VCH, 3eme édition, 2003, pages 472-474).

De préférence, l'étape c) est réalisée en présence d'eau et/ou d'éthanol. De préférence, elle contient uniquement du succinate de dialkyle et de l'acide citrique et éventuellement l'acide acétique, ainsi que de l'eau et/ou de l'éthanol.

Le succinate de dialkyle utilisé est de préférence compris dans le groupe composé du succinate de diméthyle, du succinate de diéthyle, du succinate de dipropyle , du succinate de diisopropyle et du succinate de dibutyle. De manière préférée, le succinate de dialkyle C1-C4 utilisé est le succinate de diméthyle ou le succinate de diéthyle. De manière très préférée, le succinate de dialkyle C1-C4 utilisé est le succinate de diméthyle. Au moins un succinate de dialkyle C1-C4 est utilisé, de préférence un seul, et de préférence le succinate de diméthyle.

Conformément à l'étape d) du procédé de préparation selon l'invention, le précurseur catalytique ou le catalyseur régénéré imprégné issu de l'étape c) est soumis à d'une étape de maturation. Elle est avantageusement réalisée à pression atmosphérique. La température est généralement comprise entre 17°C et 60°C ou 17°C et 50°C. Généralement la durée de maturation est comprise entre dix minutes et quarante huit heures et de préférence comprise entre trente minutes et cinq heures, est suffisante. Des durées plus longues ne sont pas exclues. Un moyen simple d'ajuster la durée de maturation est de caractériser la formation des hétéropolyanions de Keggin par spectroscopie Raman dans le précurseur catalytique séché imprégné issu de l'étape c) du procédé selon l'invention. De manière très préférée, pour augmenter la productivité sans modifier la quantité d'hétéropolyanions reformés, la durée de la maturation est comprise entre trente minutes et quatre heures. De manière encore plus préférée, la durée de la maturation est comprise entre trente minutes et trois heures.

Conformément à l'étape e) du procédé de préparation selon l'invention, le précurseur catalytique ou le catalyseur issu de l'étape d) est soumis à une étape de séchage.

Le but de cette étape est d'obtenir un catalyseur transportable, stockable, et manipulable, en particulier pour le chargement de l'unité d'hydrotraitement. Il s'agit avantageusement, selon le mode de réalisation de l'invention choisi, d'enlever tout ou partie de l'éventuel solvant ayant permis l'introduction de la combinaison du succinate de dialkyle C1-C4 (en particulier de diméthyle) et de l'acide citrique. Dans tous les cas, et en particulier dans le cas où la combinaison succinate de dialkyle C1-C4 (en particulier de diméthyle) et acide citrique est utilisée seule, il s'agit de donner un aspect sec au catalyseur, afin d'éviter que les extrudés ne se collent les uns aux autres durant les étapes de transport, de stockage, de manipulation ou de chargement.

L'étape e) de séchage du procédé selon l'invention est avantageusement effectuée par toute technique connue de l'homme du métier. Elle est avantageusement effectuée à pression atmosphérique ou à pression réduite. De manière préférée cette étape est réalisée à pression atmosphérique.

Cette étape e) est avantageusement effectuée à une température inférieure à 200°C, généralement comprise entre 50°C et inférieure à 200°C, de préférence comprise entre 60 et 190°C et de manière très préférée, comprise entre 80 et 180°C. Avantageusement, on opère dans ces gammes de températures et sans traitement thermique ultérieur à une température supérieure à 200°C.

Elle est avantageusement effectuée en four tunnel , en lit fluidisé, en lit fluidisé vibré, en lit fluidisé à échangeurs, en lit traversé ou toute technologie permettant le séchage et/ou calcination de préférence en lit fluidisé .De manière préférée, le gaz utilisé est soit l'air, soit un gaz inerte comme l'argon ou l'azote. De manière très préférée le séchage est réalisé sous azote.

De préférence, cette étape a une durée comprise entre 30 minutes et 4 heures et de préférence entre 45 minutes et 3 heures.

A l'issue de l'étape e) du procédé selon l'invention, on obtient un catalyseur séché, qui n'est soumis à aucune étape de calcination ultérieure ou de traitement thermique ultérieur à une température supérieure à 200°C.

Le catalyseur obtenu à l'issue de l'étape d) ou de l'étape e) présente un spectre Raman comprenant les bandes les plus intenses à 990 et 974 cm$^{-1}$ (hétéropolyanions de type Keggin), les bandes correspondant au succinate (pour le succinate de diméthyle la bande la plus intense est à 853 cm$^{-1}$), et les bandes caractéristiques de l'acide citrique, dont les plus intenses à 785 et 956 cm$^{-1}$ et éventuellement les bandes de l'acide acétique dont la plus intense est 896 cm$^{-1}$

Comme décrit ci-dessus, dans un autre mode, le précurseur catalytique sur lequel le succinate et l'acide (ou les acides) sont imprégnés sur un catalyseur usé régénéré dont la fonction hydrogénante est assurée par au moins un élément du groupe VIB et par au moins un élément du groupe VIII. Leurs teneurs et caractéristiques correspondent à celle citées précédemment. Les supports sont également les mêmes. Avantageusement, ce catalyseur contient du phosphore , qui a été de préférence introduit par imprégnation lors de la préparation de ce catalyseur à l'état frais.

Ledit catalyseur régénéré a subi une étape de traitement thermique appelée "régénération" en présence d'oxygène, pur ou dilué. Cette étape à pour but d'éliminer au moins une partie du coke présent sur le catalyseur par combustion. Il n'y a pas de traitement chimique lors de cette étape.

Le traitement de régénération peut être effectué à un température comprise entre 350 et 550°C, et généralement entre 450 et 520°C, ou entre 420 et 520°C , ou entre 400 et 520°C. Elle est réalisée de préférence entre 420 et 500°C, ou entre 450 et 520°C selon la nature du carbone à brûler. L'homme du métier optimise la température nécessaire au brûlage du coke (ou de ses précurseurs) tout en évitant ou minimisant le frittage du catalyseur.

Durant cette étape un contrôle de la température est nécessaire de manière à permettre la combustion du coke mais à ne pas dépasser 550°C sur le catalyseur, y compris localement. Le dépassement de la température de 550°C pourrait par exemple avoir comme conséquence d'endommager sa porosité. Ce contrôle est connu de l'homme du métier. La température au sein du lit durant cette phase de régénération peut être contrôlée par toute technique connue de l'Homme du métier, comme par exemple la disposition de thermocouples dans la masse du catalyseur.

Lorsque cette étape est effectuée avec un mélange comprenant de l'oxygène, le diluant peut être choisi parmi l'azote ou tout autre gaz inerte. La teneur en oxygène peut être fixe tout au long du traitement ou varier au cours du processus de régénération. Par exemple, la température pourra évoluer au cours du traitement selon plusieurs phases, les températures pourront varier de l'ambiante à la température finale de combustion du coke, toujours inférieure à 550°C. La durée de cette étape de régénération dépendra de la quantité de catalyseur à traiter et de la nature et de la quantité du coke présent. Cette durée peut varier en pratique de 0,1 heure à quelques jours. Le plus souvent, elle est comprise entre 1 heure et 20 heures.

Le procédé de préparation du catalyseur selon ce dernier mode comporte ensuite les étapes suivantes qui sont identiques aux autres modes de réalisation :

c) au moins une étape d'imprégnation à sec par une solution d'imprégnation comprenant le succinate de dialkyle C1-C4 (de préférence diméthyle) et l'acide citrique, et éventuellement l'acide acétique,

d) une étape de maturation , généralement à une température entre 17 et 60°C,

e) une étape de séchage, de préférence sous azote, à une température inférieure à 200°C, généralement d'au moins 80 °C, de préférence comprise entre 80-180°C, sans étape de calcination ultérieure.

Avant son utilisation, il est avantageux de transformer le catalyseur séché (après l'étape e) en un catalyseur sulfuré afin de former son espèce active. Cette phase d'activation ou de sulfuration s'effectue par les méthodes bien connues de l'homme de l'art, et avantageusement sous une atmosphère sulfo-réductrice en présence d'hydrogène et d'hydrogène sulfuré.

A l'issue de l'étape e) du procédé selon l'invention (quel que soit l'état séché, calciné, régénéré... du précurseur catalytique), ledit catalyseur séché obtenu est donc avantageusement soumis à une étape f) de sulfuration, sans étape de calcination intermédiaire. Il est obtenu un catalyseur sulfuré, selon l'invention.

Ledit catalyseur séché est avantageusement sulfuré de manière *ex situ* ou *in situ.* Les agents sulfurants sont le gaz $H_2S$ ou tout autre composé contenant du soufre utilisé pour l'activation des charges hydrocarbures en vue de sulfurer le catalyseur. Lesdits composés contenant du soufre sont avantageusement choisis parmi les alkyldisulfures tels que par exemple le disulfure de diméthyle (DMDS), les alkylsulfures, tel que par exemple le sulfure de diméthyle, le n-butylmercaptan, les composés polysulfures de type tertionony lpolysulfure tels que par exemple le TPS-37 ou le TPS-54 commercialisés par la société ARKEMA, ou tout autre composé connus de l'homme du métier permettant d'obtenir une bonne sulfuration du catalyseur. De manière préféré le catalyseur est sulfuré *in situ* en présence d'un agent sulfurant et d'une charge hydrocarbonée. De manière très préférée le catalyseur est sulfurée *in situ* en présence d'une charge hydrocarbonée additivée de disulfure de diméthyle.

Enfin, un autre objet de l'invention est un procédé d'hydrotraitement de charges hydrocarbonées utilisant le catalyseur selon l'invention. De tels procédés sont par exemple les procédés d'hydrodésulfuration, d'hydrodéazotation, d'hydrodémétallation, d'hydrogénation des aromatiques et d'hydroconversion.

Les catalyseurs séchés obtenus par le procédé selon l'invention et ayant de préférence préalablement subi une étape f) de sulfuration sont avantageusement utilisés pour les réactions d'hydrotraitement de charges hydrocarbonées telles que les coupes pétrolières, les coupes issues du charbon ou les hydrocarbures produits à partir du gaz naturel et plus particulièrement pour les réactions d'hydrogénation, d'hydrodéazotation, d'hydrodésaromatisation, d'hydrodésulfuration, d'hydrodémétallation ou d'hydroconversion de charges hydrocarbonées.

Dans ces utilisations, les catalyseurs obtenus par le procédé selon l'invention et ayant de préférence préalablement subi une étape f) de sulfuration présentent une activité améliorée par rapport aux catalyseurs de l'art antérieur. Ces catalyseurs peuvent aussi avantageusement être utilisés lors du pré-traitement des charges de craquage catalytique ou l'hydrodésulfuration des résidus ou l'hydrodésulfuration poussée des gazoles (ULSD Ultra Low Sulfur Diesel).

Les charges employées dans les procédés d'hydrotraitement sont par exemple des essences, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques, prises seules ou en mélanges. Les charges qui sont traitées, et en particulier celles citées ci-dessus, contiennent généralement des hétéroatomes tels que le soufre, l'oxygène et l'azote et, pour les charges lourdes, elles contiennent le plus souvent également des métaux.

Les conditions opératoires utilisées dans les procédés mettant en oeuvre les réactions d'hydrotraitement de charges hydrocarbonées décrites ci-dessus sont généralement les suivantes : le température est avantageusement comprise entre 180 et 450 °C, et de préférence entre 250 et 440 °C, la pression est avantageusement comprise entre 0,5 et 30 MPa, et de préférence entre 1 et 18 MPa, la vitesse volumique horaire est avantageusement comprise entre 0,1 et 20 h$^{-1}$ et de préférence entre 0,2 et 5 h$^{-1}$, et le rapport hydrogène/charge exprimé en volume d'hydrogène, mesuré dans les conditions normales de température et pression, par volume de charge liquide est avantageusement compris entre 50 L/L à 2000 L/L.

Les exemples qui suivent démontrent le gain d'activité important sur les catalyseurs préparés selon le procédé selon l'invention par rapport aux catalyseurs de l'art antérieur et précisent l'invention sans toutefois en limiter la portée.

Exemple 1 : préparation des catalyseur régénérés comparatifs B1 et B2

Une matrice composée de boehmite tabulaire ultrafine ou gel d'alumine, commercialisée par la société Condéa Chemie GmbH a été utilisée. Ce gel a été mélangé à une solution aqueuse contenant de l'acide nitrique à 66 % (7 % en poids d'acide par gramme de gel sec), puis malaxé pendant 15 minutes. A l'issue de ce malaxage, la pâte obtenue est passée à travers une filière ayant des orifices cylindriques de diamètre égal à 1,6 mm. Les extrudés sont ensuite séchés pendant une nuit à 120 °C, puis calcinés à 600 °C pendant 2 heures sous air humide contenant 50 g d'eau par kg d'air sec. On obtient ainsi des extrudés de support uniquement composé d'alumine gamma cubique de faible cristallinité.

Sur le support d'alumine décrit précédemment et qui se présente sous la forme extrudée on ajoute du cobalt, du molybdène et du phosphore. La solution d'imprégnation est préparée par dissolution à chaud de l'oxyde de molybdène (24,34 g) et d'hydroxyde de cobalt (5,34 g) dans la solution d'acide phosphorique (7,47 g) en solution aqueuse. Après imprégnation à sec, les extrudés sont laissés à maturer à température ambiante (20°C) en atmosphère saturée en eau pendant 12 h, puis ils sont séchés une nuit à 90°C et calcinés à 450°C pendant 2 heures. On obtient le catalyseur calciné A. La composition finale du catalyseur A exprimée sous forme d'oxydes est alors la suivante : $MoO_3$ = 22,5 $\pm$ 0,2 (% en poids), CoO = 4,1 $\pm$ 0,1 (% en poids) et $P_2O_5$ = 4,0 $\pm$ 0,1 (% en poids).

Le catalyseur calciné A est chargé dans une unité lit traversé et sulfuré par un gazole de distillation directe additivé de 2% poids de disulfure de diméthyle. Un test d'HDS d'un mélange de gazole de distillation directe et d'un gazole en provenance du craquage catalytique est alors conduit pendant 300 h. Après test, le catalyseur usé est déchargé, recueilli et lavé au toluène à reflux puis séparé en deux lots. Le premier lot est régénéré en four de combustion contrôlée en introduisant pour chaque palier de température des quantités croissantes d'oxygène, ce qui permet de limiter l'exothermie lié à la combustion du coke. Le palier final de régénération est de 450°C. Le catalyseur ainsi régénéré est analysé par DRX. On note l'absence de raie à 26° caractéristique de la présence de $CoMoO_4$ cristallisé. Ce catalyseur sera par la suite noté B1. Le second lot de catalyseur usé lavé est régénéré en four à moufle à 450°C sans contrôle de l'exothermie de la combustion du coke. L'analyse DRX réalisée après régénération montre la présence d'une raie fine à 26°, caractéristique de la présence de $CoMoO_4$ cristallisé. En outre, ce catalyseur qui sera désormais noté B2 possède une couleur bleu vif très prononcée.

Exemple 2 : préparation d'un catalyseur régénéré selon l'invention C1- réalisation avec l'acide citrique

Le catalyseur C1 est préparé par imprégnation à sec d'une solution d'acide citrique et de diméthyle succinate dilués dans l'éthanol au catalyseur B1. Les teneurs visées en acide citrique (CA) et en diméthyle succinate (DMSU) sont respectivement de 15 % poids et 10 % poids (soit AC/Mo=0,50 mol/mol et DMSU/Mo=0,44 mol/mol). Après une durée de maturation de 24 heures en vase clos à température ambiante, le catalyseur est séché sous flux d'azote (1 NL/ g/ g) durant 1 heure.

Le catalyseur C1 a été analysé par spectroscopie Raman. Il présente la bande notamment la bande principale de l'HPA de Keggin à 990 cm$^{-1}$ et les bandes caractéristiques de l'acide citrique et du diméthyle succinate respectivement à 785 cm$^{-1}$ et 851 cm$^{-1}$.

Exemple 3 : préparation d'un catalyseur régénéré selon l'invention C2- réalisation avec l'acide citrique et l'acide acétique

Le catalyseur C2 est préparé par imprégnation à sec d'une solution d'acide citrique de diméthyle succinate et d'acide acétique dilués dans l'éthanol au catalyseur B2 qui présente une phase $CoMoO_4$ cristallisé. Les teneurs visées en acide citrique (CA), en diméthyle succinate (DMSU) et en acide acétique (AA) sont respectivement de 15 % poids, 10 % poids et 20 % poids (soit AC/Mo=0,50 mol/mol, DMSU/Mo=0,44 mol/mol et AA/Mo=2,13 mol/mol). Après une durée de maturation de 24 heures en vase clos à température ambiante, le catalyseur est séché sous flux d'azote (1 NL/ g/ g) durant 1 heure.

Le catalyseur C2 a été analysé par spectroscopie Raman. Il présente la bande notamment la bande principale de l'HPA de Keggin à 990 cm$^{-1}$ et les bandes caractéristiques de l'acide citrique, du diméthyle succinate et de l'acide acétique respectivement à 785 cm$^{-1}$, 851 cm$^{-1}$ et 896 cm$^{-1}$.

Exemple 2bis : préparation d'un catalyseur régénéré selon l'invention C1bis- réalisation avec l'acide citrique et l'acide acétique

Le catalyseur est préparé de la même façon que dans l'exemple 3 mais à partir du catalyseur régénéré B1.

Exemple 3bis : préparation d'un catalyseur régénéré selon l'invention C2bis- réalisation avec l'acide citrique

Le catalyseur est préparé de la même façon que dans l'exemple 2 mais à partir du catalyseur régénéré B2.

Exemple 4 : Test comparatif des catalyseurs B1, B2, C1, C2, C1bis et C2bis en hydrogénation du toluène dans le cyclohexane sous pression et en présence d'hydrogène sulfuré.

Les catalyseurs précédemment décrits, sont sulfurés in situ en dynamique dans le réacteur tubulaire à lit fixe traversé d'une unité pilote de type Microcat (constructeur : société Vinci), les fluides circulant de haut en bas. Les mesures d'activité hydrogénante sont effectuées immédiatement après la sulfuration sous pression et sans remise à l'air avec la charge d'hydrocarbures qui a servi à sulfurer les catalyseurs.

La charge de sulfuration et de test est composée de 5,8 % de diméthyldisulfure (DMDS), 20 % de toluène et 74,2 % de cyclohexane (en poids).

La sulfuration est effectuée dès température ambiante jusqu'à 350°C, avec une rampe de température de 2°C/min, une VVH = 4h⁻¹ et $H_2$/HC = 450 Nl/l. Le test catalytique est effectué à 350°C à VVH = 2h⁻¹ et $H_2$/HC équivalent à celui de la sulfuration, avec prélèvement minimum de 4 recettes qui sont analysées par chromatographie en phase gazeuse.

On mesure ainsi les activités catalytiques stabilisées de volumes égaux de catalyseurs dans la réaction d'hydrogénation du toluène.

Les conditions détaillées de mesure d'activité sont les suivantes:

| | |
|---|---|
| - Pression totale : | 6,0 MPa |
| - Pression de toluène : | 0,37 MPa |
| - Pression de cyclohexane : | 1,42 MPa |
| - Pression de méthane | 0,22 MPa |
| - Pression d'hydrogène : | 3,68 MPa |
| - Pression d'HZS : | 0,22 MPa |
| - Volume de catalyseur : | 4 cm³ (extrudés de longueur comprise entre 2 et 4 mm) |
| - Vitesse spatiale horaire : | 2 h⁻¹ |
| - Température de sulfuration et de test : | 350°C |

Des prélèvements de l'effluent liquide sont analysés par chromatographie en phase gazeuse. La détermination des concentrations molaires en toluène non converti (T) et des concentrations ses produits d'hydrogénation (le méthylcyclohexane (MCC6), l'éthylcyclopentane (EtCC5) et les diméthylcyclopentanes (DMCC5)) permettent de calculer un taux d'hydrogénation de toluène $X_{HYD}$ défini par :

$$X_{HYD}(\%) = 100 \times \frac{MCC6 + EtCC5 + DMCC5}{T + MCC6 + EtCC5 + DMCC5}$$

La réaction d'hydrogénation du toluène étant d'ordre 1 dans les conditions de test mises en oeuvre et le réacteur se comportant comme un réacteur piston idéal, on calcule l'activité hydrogénante $A_{HYD}$ des catalyseurs en appliquant la formule :

$$A_{HYD} = \ln\left(\frac{100}{100 - X_{HYD}}\right)$$

Le Tableau 1 compare les activités hydrogénantes relatives des catalyseurs B1 et B2 (non conformes), et des catalyseurs C1 et C2 (selon l'invention) égales au rapport de l'activité du catalyseur sur l'activité du catalyseur B2 (non conforme) pris comme référence (activité 100 %).

*Tableau 1 : Activités relatives par rapport au catalyseur calciné B2 (non conforme)*

| Catalyseur | Type d'acide | Quantité d'acide (% poids par rapport au catalyseur final) | Type d'additif organique | Quantité d'additif organique (% poids par rapport au catalyseur final) | $A_{HYD}$ relative par rapport à B2 (%) |
|---|---|---|---|---|---|
| B1 régénéré non conforme | - | 0 | - | 0 | 100 |

(suite)

| Catalyseur | Type d'acide | Quantité d'acide (% poids par rapport au catalyseur final) | Type d'additif organique | Quantité d'additif organique (% poids par rapport au catalyseur final) | $A_{HYD}$ relative par rapport à B2 (%) |
|---|---|---|---|---|---|
| B2 régénéré non conforme | - | 0 | - | 0 | 87 |
| C1 conforme | CA | 15 | DMSU | 10 | 116 |
| C2 conforme | CA+AA | 15+20 | DMSU | 10 | 119 |
| C1bis (à partir de B1) conforme | CA+AA | 15+20 | DMSU | 10 | 120 |
| C2bis (à partir de B2) conforme | CA | 15 | DMSU | 10 | 108 |

Le catalyseur régénéré dans des conditions non contrôlées B2 (non conforme) a une activité moindre que le catalyseur régénéré B1 (non conforme).

Le Tableau 1 montre que le catalyseur additivé C1 (conforme) préparé par ajout de 15 % poids d'acide citrique (CA) et de 10 % de Diméthyle succinate (DMSU) au catalyseur B1 a une activité améliorée par rapport au catalyseur de départ de 16 % , l'ajout d'acide acétique amène le gain à 20% (catalyseur C1bis).

Le Tableau 1 montre que le catalyseur additivé C2 bis (conforme) préparé par ajout de 15 % poids d'acide citrique (CA) et de 10 % de Diméthyle succinate (DMSU) au catalyseur B2 a une activité améliorée par rapport au catalyseur de départ de 24 % , l'ajout d'acide acétique amène le gain à 37% (catalyseur C2).

Ces résultats catalytiques montrent l'effet particulier et surprenant de la combinaison acide citrique (AC) et succinate de diméthyle (DMSU) sur catalyseur régénéré (conforme à l'invention) et en particulier sur un catalyseur régénéré qui présenterait des phases cristallines cas de B2). Cet effet est encore amélioré par l'ajout d'acide acétique.

**Revendications**

1. Catalyseur comprenant un support amorphe à base d'alumine, au moins un succinate de dialkyle C1-C4, de l'acide citrique, du phosphore et une fonction hydro-déshydrogénante comprenant au moins un élément du groupe VIB et au moins un élément du groupe VIII catalyseur dont le spectre Raman comprend les bandes à 990 et/ou 974 cm$^{-1}$ caractéristiques d'au moins un hétéropolyanion de Keggin, les bandes caractéristiques dudit succinate et les bandes principales caractéristiques de l'acide citrique.

2. Catalyseur selon la revendication 1 dans lequel le succinate de dialkyle est le succinate de diméthyle et dans lequel le catalyseur possède dans son spectre les bandes Raman principales à 990 et/ou 974 cm$^{-1}$ caractéristiques des hétéropolyanions de Keggin, et 853 cm$^{-1}$ caractéristique du succinate de diméthyle et 785 et 956 cm$^{-1}$ caractéristiques de l'acide citrique.

3. Catalyseur selon l'une des revendications précédentes comprenant également de l'acide acétique dont le spectre Raman comprend la raie à 896 cm$^{-1}$ caractéristique de l'acide acétique.

4. Catalyseur selon l'une des revendications 1 ou 3 dans lequel le succinate de dialkyle est le succinate de diéthyle, le succinate de dibutyle ou le succinate de diisopropyle.

5. Catalyseur selon l'une des revendications précédentes dans lequel le support contient plus de 25% pds d'alumine.

6. Catalyseur selon l'une des revendications précédentes comprenant un support constitué d'alumine ou constitué de silice-alumine.

7. Catalyseur selon l'une des revendications précédentes comprenant également du bore et/ou du fluor.

8. Catalyseur selon l'une des revendications précédentes, dans lequel la fonction hydro-déshydrogénante comprend du molybdène, du nickel et/ou du cobalt.

9. Catalyseur selon l'une des revendications précédentes et sulfuré.

10. Procédé de préparation d'un catalyseur selon l'une des revendications précédentes, ledit procédé comprenant les étapes successives suivantes :

    ab) préparation d'un précurseur catalytique contenant les éléments de la fonction hydro-déshydrogénante, éventuellement du phosphore, ledit précurseur ayant subi un traitement thermique
    c) au moins une étape d'imprégnation par une solution d'imprégnation comprenant au moins un succinate de dialkyle C1-C4, l'acide citrique et au moins un composé de phosphore, si le phosphore n'a pas été introduit par imprégnation en totalité à l'étape ab) et éventuellement l'acide acétique,
    d) une étape de maturation,
    e) une étape de séchage à une température inférieure à 200°C, sans étape de calcination ultérieure.

11. Procédé de préparation d'un catalyseur selon l'une de revendications précédentes, ledit procédé comprenant les étapes successives suivantes :

    a) au moins une étape d'imprégnation d'un support amorphe à base d'alumine par au moins une solution contenant les éléments de la fonction hydro-déshydrogénante, et éventuellement du phosphore
    b) séchage à une température inférieure à 180°C éventuellement suivi d'une calcination à une température d'au moins 350°C, et de préférence comprise entre 420 et 520°C;
    c) au moins une étape d'imprégnation par une solution d'imprégnation comprenant au moins un succinate de dialkyle C1-C4, l'acide citrique et au moins un composé de phosphore, si le phosphore n'a pas été introduit en totalité à l'étape a) et éventuellement l'acide acétique,
    d) une étape de maturation,
    e) une étape de séchage à une température inférieure à 200°C, sans étape de calcination ultérieure.

12. Procédé de préparation d'un catalyseur selon l'une de revendications précédentes, dans lequel le précurseur catalytique est un catalyseur usé, ledit procédé comprenant les étapes successives suivantes :

    a'b') régénération du catalyseur usé comprenant une fonction hydro-déshydrogénante et éventuellement du phosphore,
    c) au moins une étape d'imprégnation par une solution d'imprégnation comprenant au moins un succinate de dialkyle C1-C4, l'acide citrique et éventuellement au moins un composé de phosphore si le phosphore n'a pas été introduit en totalité dans le catalyseur de l'étape a'b'), et éventuellement l'acide acétique,
    d) une étape de maturation,
    e) une étape de séchage à une température inférieure à 200°C, sans étape de calcination ultérieure.

13. Procédé selon la revendication 11 dans lequel la totalité de la fonction hydro-déshydrogénante est introduite lors de l'étape a).

14. Procédé selon l'une des revendications 10 à 13 dans lequel l'étape c) est réalisée en présence d'eau et/ou d'éthanol.

15. Procédé selon l'une des revendications 10 à 14 dans lequel le succinate de dialkyle et l'acide citrique sont introduits dans la solution d'imprégnation de l'étape c) dans une quantité correspondant à un rapport molaire de succinate de dialkyle par élément(s) du groupe VIB imprégné du précurseur catalytique compris entre 0,15 et 2 mole/mole, et à un rapport molaire d'acide citrique par élément(s) du groupe VIB imprégné du précurseur catalytique compris entre 0,05 et 5 mole/mole.

16. Procédé selon la revendication 15 dans lequel la solution d'imprégnation contient également de l'acide acétique , le rapport molaire d'acide acétique par élément(s) du GVIB imprégné du précurseur catalytique est compris entre 0,1 à 6 mole/mole, et le rapport molaire d'acide citrique + acide acétique par élément(s) du GVIB imprégné du précurseur catalytique est compris entre 0,15 à 6 mole/mole.

17. Procédé selon l'une des revendications 10 à 16 dans lequel l'étape d) est réalisée à une température de 17 à 50°C.

18. Procédé selon l'une des revendications 10 à 17 dans lequel l'étape e) est réalisée à une température de 80 à 180°C, sans calcination ultérieure.

19. Procédé selon l'une des revendications 10 à 18 dans lequel la quantité de phosphore introduite par imprégnation est comprise entre 0,1 à 20 % poids (exprimée en pds oxyde par rapport au précurseur catalytique après traitement thermique de l'étape ab) ou b)), la quantité d' (des) élément(s) du groupe VIB est comprise entre 5 et 40 % poids ( exprimée en pds oxyde par rapport au précurseur catalytique après traitement thermique de l'étape ab) ou b)), la quantité d' (des) élément(s) du groupe VIII est comprise entre 1 et 10 % poids (exprimée en pds oxyde par rapport au précurseur catalytique après traitement thermique de l'étape ab) ou b)).

20. Procédé selon l'une des revendications 10 à 19 dans lequel le produit obtenu à l'issue de l'étape e) subit une étape de sulfuration.

21. Procédé d'hydrotraitement de charges hydrocarbonées en présence d'un catalyseur selon l'une des revendications 1 à 9 ou préparé par le procédé selon l'une des revendications 10 à 20.

22. Procédé selon la revendication 21 dans lequel l'hydrotraitement est une hydrodésulfuration, une hydrodéazotation, une hydrodémétallation, une hydrogénation des aromatiques ou une hydroconversion.

23. Procédé selon la revendication 22 dans lequel l'hydrotraitement est une hydrodésulfuration poussée de gazoles.

**Patentansprüche**

1. Katalysator, umfassend einen amorphen Träger auf Basis von Aluminiumoxid, mindestens ein C1-C4 Dialkyl-Succinat, Zitronensäure, Phosphor und eine hydrierend-dehydrierende Funktion, umfassend mindestens ein Element der Gruppe IVB und mindestens ein Element der Gruppe VIII, wobei das Raman-Spektrum des Katalysators die Bänder bei 990 und/oder 974 cm$^{-1}$, die für mindestens ein Keggin-Heteropolyanion charakteristisch sind, die charakteristischen Bänder des Succinats und die charakteristischen Hauptbänder der Zitronensäure umfasst.

2. Katalysator nach Anspruch 1, bei dem das Dialkyl-Succinat das Dimethyl-Succinat ist, und wobei der Katalysator in seinem Spektrum die Raman-Hauptbänder bei 990 und/oder 974 cm$^{-1}$, die für die Keggin-Heteropolyanionen charakteristisch sind, und bei 853 cm$^{-1}$, das für das Dimethyl-Succinat charakteristisch ist, und bei 785 und 956 cm$^{-1}$, die für die Zitronensäure charakteristisch sind, umfasst.

3. Katalysator nach einem der vorhergehenden Ansprüche, auch umfassend die Essigsäure, deren Raman-Spektrum die Linie bei 896 cm$^{-1}$ umfasst, die für die Essigsäure charakteristisch ist.

4. Katalysator nach einem der Ansprüche 1 oder 3, bei dem das Dialkyl-Succinat das Diethyl-Succinat, das Dibutyl-Succinat oder das Diisopropyl-Succinat ist.

5. Katalysator nach einem der vorhergehenden Ansprüche, bei dem der Träger mehr als 25 Gew.-% Aluminiumoxid enthält.

6. Katalysator nach einem der vorhergehenden Ansprüche, umfassend einen Träger, der von Aluminiumoxid oder Siliziumoxid-Aluminiumoxid gebildet ist.

7. Katalysator nach einem der vorhergehenden Ansprüche, umfassend auch Bor und/oder Fluor.

8. Katalysator nach einem der vorhergehenden Ansprüche, bei dem die hydrierend-dehydrierende Funktion Molybdän, Nickel und/oder Kobalt umfasst.

9. Katalysator nach einem der vorhergehenden Ansprüche, der schwefelhaltig ist.

10. Verfahren zur Herstellung eines Katalysators nach einem der vorhergehenden Ansprüche, wobei das Verfahren die folgenden aufeinanderfolgenden Schritte umfasst:

    ab) Herstellen eines katalytischen Vorläufers, der die Elemente der hydrierend-dehydrierenden Funktion, eventuell Phosphor, enthält, wobei der Vorläufer einer Wärmebehandlung unterzogen wurde,

c) mindestens einen Schritt des Imprägnierens mit einer Imprägnierlösung, umfassend mindestens ein C1-C4 Dialkyl-Succinat, die Zitronensäure und mindestens eine Phosphorverbindung, wenn das Phosphor nicht durch Imprägnieren zur Gänze in Schritt ab) eingeleitet wurde, und die Essigsäure,

d) einen Reifungsschritt,

e) einen Trocknungsschritt bei einer Temperatur unter 200°C ohne späteren Kalzinierungsschritt.

11. Verfahren zur Herstellung eines Katalysators nach einem der vorhergehenden Ansprüche, wobei das Verfahren die folgenden aufeinanderfolgenden Schritte umfasst:

a) mindestens einen Schritt des Imprägnierens eines amorphen Trägers auf Basis von Aluminiumoxid mit mindestens einer Lösung, die die Elemente der hydrierend-dehydrierenden Funktion und eventuell Phosphor enthält,

b) Trocknen bei einer Temperatur unter 180°C, eventuell gefolgt von einer Kalzinierung bei einer Temperatur von mindestens 350°C und vorzugsweise zwischen 420 und 520°C;

c) mindestens einen Schritt des Imprägnierens mit einer Imprägnierlösung, umfassend mindestens ein C1-C4 Dialkyl-Succinat, die Zitronensäure und mindestens eine Phosphorverbindung, wenn das Phosphor nicht zur Gänze in Schritt a) eingeleitet wurde, und eventuell die Essigsäure,

d) einen Reifungsschritt,

e) einen Trocknungsschritt bei einer Temperatur unter 200°C ohne späteren Kalzinierungsschritt.

12. Verfahren zur Herstellung eines Katalysators nach einem der vorhergehenden Ansprüche, bei dem der katalytische Vorläufer ein gebrauchter Katalysator ist, wobei das Verfahren die folgenden aufeinanderfolgenden Schritte umfasst:

a'b') Regeneration des gebrauchten Katalysators, umfassend eine hydrierend-dehydrierende Funktion und eventuell Phosphor,

c) mindestens einen Schritt des Imprägnierens mit einer Imprägnierlösung, umfassend mindestens ein C1-C4 Dialkyl-Succinat, die Zitronensäure und mindestens eine Phosphorverbindung, wenn das Phosphor nicht zur Gänze in den Katalysator in Schritt a'b') eingeleitet wurde, und eventuell die Essigsäure,

d) einen Reifungsschritt,

e) einen Trocknungsschritt bei einer Temperatur unter 200°C ohne späteren Kalzinierungsschritt.

13. Verfahren nach Anspruch 11, bei dem die Gesamtheit der hydrierenddehydrierenden Funktion in Schritt a) eingeleitet wird.

14. Verfahren nach einem der Ansprüche 10 bis 13, bei dem der Schritt c) im Beisein von Wasser und/oder Ethanol durchgeführt wird.

15. Verfahren nach einem der Ansprüche 10 bis 14, bei dem das Dialkyl-Succinat und die Zitronensäure in die Imprägnierlösung des Schrittes c) in einer Menge entsprechend einem Molverhältnis von Dialkyl-Succinat pro imprägniertem Element der Gruppe VIB des katalytischen Vorläufers zwischen 0,15 und 2 Mol/Mol und einem Molverhältnis von Zitronensäure pro imprägniertem Element der Gruppe VIB des katalytischen Vorläufers zwischen 0,05 und 5 Mol/Mol eingeleitet werden.

16. Verfahren nach Anspruch 15, bei dem die Imprägnierlösung auch Essigsäure enthält, wobei das Molverhältnis pro imprägniertem Element der Gruppe VIB des katalytischen Vorläufers zwischen 0,1 und 6 Mol/Mol und das Molverhältnis von Zitronensäure + Essigsäure pro imprägniertem Element der Gruppe VIB des katalytischen Vorläufers zwischen 0,15 und 6 Mol/Mol beträgt.

17. Verfahren nach einem der Ansprüche 10 bis 16, bei dem der Schritt d) bei einer Temperatur von 17 bis 50°C durchgeführt wird.

18. Verfahren nach einem der Ansprüche 10 bis 17, bei dem der Schritt e) bei einer Temperatur von 80 bis 180°C ohne spätere Kalzinierung durchgeführt wird.

19. Verfahren nach einem der Ansprüche 10 bis 18, bei dem die durch Imprägnieren eingeleitete Phosphormenge zwischen 0,1 und 20 Gew.-% (ausgedrückt in Gewicht Oxid in Bezug zum katalytischen Vorläufer nach Wärmebehandlung in Schritt ab) oder b)), die Menge d' des(r) Elements(e) der Gruppe VIB zwischen 5 und 40 Gew.-%

(ausgedrückt in Gewicht Oxid in Bezug zum katalytischen Vorläufer nach Wärmebehandlung in Schritt ab) oder b)), die Menge d' des(r) Elements(e) der Gruppe VII zwischen 1 und 10 Gew.-% beträgt (ausgedrückt in Gewicht Oxid in Bezug zum katalytischen Vorläufer nach Wärmebehandlung in Schritt ab) oder b)).

20. Verfahren nach einem der Ansprüche 10 bis 19, bei dem das erhaltene Produkt nach dem Schritt e) einer Sulfurierung unterzogen wird.

21. Verfahren zur Hydrobehandlung von Kohlenwasserstoff-Füllstoffen im Beisein eines Katalysators nach einem der Ansprüche 1 bis 9 oder hergestellt durch das Verfahren nach einem der Ansprüche 10 bis 20.

22. Verfahren nach Anspruch 21, bei dem die Hydrobehandlung eine Hydroentschwefelung, eine Hydroentstickung, eine Hydroentmetallisierung, eine Hydrierung der Aromaten oder eine Hydrokonversion ist.

23. Verfahren nach Anspruch 22, bei dem die Hydrobehandlung eine starke Hydroentschwefelung der Dieselkraftstoffe ist.

## Claims

1. A catalyst comprising an amorphous support based on alumina, at least one C1-C4 dialkyl succinate, citric acid, phosphorus and a hydrodehydrogenating function comprising at least one element from group VIB and at least one element from group VIII, with the Raman spectrum of the catalyst comprising bands at 990 and/or 974 $cm^{-1}$, characteristic of at least one Keggin heteropolyanion, the characteristic bands of said succinate and the principal characteristic bands of citric acid.

2. A catalyst according to claim 1, in which the dialkyl succinate is dimethyl succinate and in which the Raman spectrum of the catalyst has principal bands at 990 and/or 974 $cm^{-1}$ characteristic of Keggin heteropolyanions, and at 853 $cm^{-1}$, characteristic of dimethyl succinate and at 785 and 956 $cm^{-1}$, characteristic of citric acid.

3. A catalyst according to one of the preceding claims, also comprising acetic acid the Raman spectrum of which includes a line at 896 $cm^{-1}$, characteristic of acetic acid.

4. A catalyst according to one of claims 1 or 3, in which the dialkyl succinate is diethyl succinate, dibutyl succinate or diisopropyl succinate.

5. A catalyst according to one of the preceding claims, in which the support contains more than 25% by weight of alumina.

6. A catalyst according to one of the preceding claims, comprising a support constituted by alumina or constituted by silica-alumina.

7. A catalyst according to one of the preceding claims, also comprising boron and/or fluorine.

8. A catalyst according to one of the preceding claims, in which the hydrodehydrogenating function comprises molybdenum, nickel and/or cobalt.

9. A catalyst according to one of the preceding claims, which is sulphurized.

10. A process for preparing a catalyst according to one of the preceding claims, said process comprising the following steps in succession:

ab) preparing a catalytic precursor containing the elements of the hydrodehydrogenating function, and optionally phosphorus, said precursor having undergone a heat treatment;
c) at least one step for impregnation with an impregnation solution comprising at least one C1-C4 dialkyl succinate, citric acid and at least one compound of phosphorus, if the phosphorus has not been introduced in totality by impregnation in step ab), and optionally, acetic acid;
d) a step for maturation;
e) a step for drying at a temperature of less than 200°C, without a subsequent calcining step.

11. A process for preparing a catalyst according to one of the preceding claims, said process comprising the following steps in succession:

a) at least one step for impregnation of an amorphous support based on alumina with at least one solution containing the elements of the hydrodehydrogenating function, and optionally phosphorus;
b) drying at a temperature below 180°C optionally followed by calcining at a temperature of at least 350°C, preferably in the range 420°C to 520°C;
c) at least one step for impregnation with an impregnation solution comprising at least one C1-C4 dialkyl succinate, citric acid, at least one compound of phosphorus, if the phosphorus has not been introduced in its entirety in step a), and optionally acetic acid;
d) a step for maturation;
e) a step for drying at a temperature of less than 200°C, without a subsequent calcining step.

12. A process for preparing a catalyst according to one of the preceding claims, in which the catalytic precursor is a spent catalyst, said process comprising the following steps in succession:

a'b') regenerating spent catalyst comprising a hydrodehydrogenating function and optionally phosphorus;
c) at least one step for impregnation with an impregnation solution comprising at least one C1-C4 dialkyl succinate, citric acid, optionally at least one compound of phosphorus if the phosphorus has not been introduced into the catalyst in its entirety in step a'b'), and optionally acetic acid;
d) a step for maturation;
e) a step for drying at a temperature of less than 200°C, without a subsequent calcining step.

13. A process according to claim 11, in which the whole of the hydrodehydrogenating function is introduced during step a).

14. A process according to one of claims 10 to 13, in which step c) is carried out in the presence of water and/or ethanol.

15. A process according to one of claims 10 to 14, in which the dialkyl succinate and citric acid are introduced into the impregnation solution of step c) in a quantity corresponding to a molar ratio of dialkyl succinate to the impregnated element(s) from group VIB of the catalytic precursor in the range 0.15 to 2 mole/mole, and in a molar ratio of citric acid to the impregnated element(s) from group VIB of the catalytic precursor in the range 0.05 to 5 mole/mole.

16. A process according to claim 15, in which the impregnation solution also contains acetic acid, the molar ratio of acetic acid to the impregnated element(s) from group VIB of the catalytic precursor is in the range 0.1 to 6 mole/mole, and the molar ratio of citric acid + acetic acid to the impregnated element(s) from group VIB of the catalytic precursor is in the range 0.15 to 6 mole/mole.

17. A process according to one of claims 10 to 16, in which step d) is carried out at a temperature of 17°C to 50°C.

18. A process according to one of claims 10 to 17, in which step e) is carried out at a temperature of 80°C to 180°C, without subsequent calcining.

19. A process according to one of claims 10 to 18, in which the quantity of phosphorus introduced by impregnation is in the range 0.1% to 20% by weight (expressed as the weight of oxide with respect to the catalytic precursor after heat treatment in step ab) or b)), the quantity of element(s) from group VIB is in the range 5% to 40% by weight (expressed as the weight of oxide with respect to the catalytic precursor after heat treatment in step ab) or b)), and the quantity of element(s) from group VIII is in the range 1% to 10% by weight (expressed as the weight of oxide with respect to the catalytic precursor after heat treatment in step ab) or b)).

20. A process according to one of claims 10 to 19, in which the product obtained at the end of step e) undergoes a sulphurization step.

21. A process for the hydrotreatment of hydrocarbon feeds in the presence of a catalyst in accordance with one of claims 1 to 9 or prepared using the process according to one of claims 10 to 20.

22. A process according to claim 21, in which the hydrotreatment is hydrodesulphurization, hydrodenitrogenation, hydrodemetallization, hydrogenation of aromatics or hydroconversion.

**23.** A process according to claim 22, in which the hydrotreatment is intense gas oil hydrodesulphurization.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9641848 A
- WO 0176741 A
- US 4012340 A
- US 3954673 A
- EP 601722 A
- EP 466568 A
- EP 1046424 A
- WO 2006077326 A
- JP 7136523 A
- WO 2005035691 A

**Littérature non-brevet citée dans la description**

- **B. S CLAUSEN ; H. T. TOPSØE ; F.E. MASSOTH.** Catalysis Science and Technology. Springer-Verlag, 1996, vol. 11
- **TOPSØE et al.** *Catalysis Review Science and Engineering,* 1984, 395-420
- *Journal Officiel de l'Union européenne,* 22 Mars 2003, vol. L76, L76, , 10-L76, 19
- **GRIBOVAL ; BLANCHARD ; PAYEN ; FOURNIER ; DUBOIS.** *Catalysis Today,* 1998, vol. 45, 277
- **GRIBOVAL ; BLANCHARD ; GENGEMBRE ; PAYEN ; FOURNIER ; DUBOIS ; BERNARD.** *Journal of Catalysis,* 1999, vol. 188, 102
- **M. T. POPE.** Heteropoly and Isopoly oxometalates. Springer Verlag, 8
- Solvents and Solvent Effects. **C. REICHARDT.** Organic Chemistry. Wiley-VCH, 2003, 472-474